# EUROPEAN PATENT SPECIFICATION

(11) **EP 3 169 518 B1**
(45) Date of publication and mention of the grant of the patent: **13.06.2018**
(21) Application number: 15734354.2
(22) Date of filing: 03.07.2015
(51) Int. Cl.: B32B 33/00, B65D 65/40, B32B 3/26, B32B 38/08

(54) **METHOD OF MANUFACTURING A LAMINATED PACKAGING MATERIAL AND LAMINATED PACKAGING MATERIAL**
VERFAHREN ZUR HERSTELLUNG EINES LAMINIERTEN VERPACKUNGSMATERIALS UND LAMINIERTES VERPACKUNGSMATERIAL
PROCEDE DE FABRICATION D'UN MATERIAU D'EMBALLAGE STRATIFIE, ET MATERIAU D'EMBALLAGE STRATIFIE

(30) Priority: 14.07.2014 EP 14176977
(43) Date of publication of application: 24.05.2017
(73) Proprietor: Tetra Laval Holdings & Finance SA, 1009 Pully (CH)
(72) Inventor: ÖHMAN, Peter, S-227 30 Lund (SE)
(74) Representative: Tetra Pak - Patent Attorneys SE
(86) International application number: PCT/EP2015/065238
(87) International publication number: WO 2016/008744

(56) References cited:
- WO-A2-02/42040
- FR-A1- 2 975 337

## Description

### Technical field

The present invention relates to a method of manufacturing a laminated packaging material comprising an outermost layer of a transparent polymer, to be directed towards the outside of a package made from the laminated packaging material, a substrate layer being a carton or cellulose-based bulk layer, or being a pre-laminate comprising a pre-manufactured film, which is laminated to a carton or cellulose-based bulk layer, and a second, outermost layer of a thermo-sealable polymer, arranged on the other side of the substrate layer opposite to the first outermost layer, and one or more further material layers, comprising a barrier layer, between said substrate layer and said second, outermost polymer layer, the laminated packaging material exhibiting a visual or tactile pattern, or a combination thereof, in the first outermost transparent polymer layer.

The invention also relates to a laminated packaging material produced by the method. In particular, the invention relates to a laminated packaging material for aesthetically pleasing and attractive packaging of liquid food, such as beverages, soups or sauces, or for semi-liquid food products.

In addition, the invention relates to a packaging container for liquid or semi-liquid food, produced from the laminated packaging material.

### Background of the invention

A known packaging laminate of the type described above and suitable for liquid packaging generally has a bulk layer of paper or paperboard and outer liquid-tight coatings of polyolefin such as polyethylene (PE), such as low-density polyethylene (LDPE), or of polypropylene (PP). In order to provide the packaging laminate with barrier properties, mainly against gases, in particular oxygen, but also against flavouring agents and water vapour, the packaging laminate additionally has at least one further layer of a material which provides such barrier properties and which is bonded to the paper or paperboard layer by a lamination layer, preferably of low-density polyethylene (LDPE). Examples of materials for a further layer having barrier properties can be a layer or film containing a polymer with inherent barrier properties, for example a copolymer of ethylene and vinyl alcohol (EVOH) or a polyamide (PA), or a prefabricated film coated with a liquid-film-coated or vacuum-deposited or vapour-deposited layer having corresponding barrier properties. A common example of coated prefabricated films of this kind is that of oriented films of polyester, for example polyethylene terephthalate (PET), or of polypropylene (PP), coated with a metallized layer or with a layer coated by plasma-enhanced vapour deposition. An aluminium foil is generally used which, in addition to having excellent barrier properties against gases, in particular oxygen, also has the advantageous property of allowing the packaging laminate to be heat-sealed by induction sealing, which is a rapid, simple and effective heat-sealing technique.

The known packaging laminate is conventionally produced from a web of paper or paperboard which is unwound from a storage reel, while at the same time a web of aluminium foil is unwound from a corresponding storage reel. The two webs are brought together with each other and are both guided through the nip between two adjacent rotatable cylinders, while at the same time a laminating material, usually low-density polyethylene (LDPE), is applied between the webs in order to permanently bind the aluminium web to the paper or paperboard web. The paper or paperboard web is thereafter provided on both sides with liquid-tight coatings of polyethylene, normally low-density polyethylene (LDPE), and is then wound up on finished packaging reels for onward transport and handling.

Packaging containers are generally produced from such laminated packaging materials by means of modern, high-speed packaging machines of the type that form, fill and seal packages from a web or from prefabricated blanks of the laminated packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedic or cuboid, by fold formation along prepared crease lines in the packaging material. The main advantage of this concept of a continuous tube-forming, filling and sealing packaging method is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean circumstances such that the filled package may be stored for a long time even at ambient temperature, without the risk of growth of micro-organisms in the filled product. Another important advantage of the Tetra Brik® Aseptic -type packaging method is, as stated above, the possibility of continuous high-speed packaging, which has considerable impact on cost efficiency. Typically, many thousands of packages may be prepared per hour. For example the Tetra Pak® A3/speed may manufacture about 15 000 packages per hour (family-size packaging containers of 0.9 liters and above), and about 24 000 packaging containers per hour (portion packages).

According to another method, packages are made one by one from prefabricated blanks of packaging material, e.g. in Tetra Rex® -type filling machines, thus providing so-called gable-top shaped packages, or other blanks-based packages.

Liquid carton packages of the described type are known to provide consumers with safe and reliable packaging, which can be provided with different printed decors and further be varied by shape and size, thus offering a vast range of different packaging products to chose from, adapted to the food product to be filled into the packages. White milk, which is a high quality but comparatively low-price product is normally packed in packages wherein the printed decor has been printed on the bulk paperboard layer, and then been coated with an outermost, transparent, liquid-tight, protective and thermo-sealable thermoplastic polymer layer. Premium juices and nectars or still drinks, are on the other hand often marketed in packages where the printed decor has a metallised background. Such metallised background is then provided by laminating a metallised pre-manufactured film into the packaging laminate, adjacent to the bulk layer. The printed decor with text and pictures is then printed onto the pre-manufactured film. Pre-manufactured films, and in particular metallised such films, are comparatively expensive in a packaging laminate of this kind. Such laminated materials for premium beverage products consequently entail a higher cost than normal laminated packaging materials for liquid carton packaging, in which the printed decor is provided directly onto the bulk paper layer. On the other hand, if it were possible to enhance the decorative effect of such a pre-manufactured film even further, more value may be gained from the use of such a film, in order to justify the higher cost.

There is a trend that higher demands and requirements are put on the quality of the printed decor on carton packages, in order to please and attract consumers and retailers. In addition, there is a long-felt need for opportunities to offer new features of the laminated packaging materials in terms of printed decor and visible appearance. There is a general wish among package fillers and dairies for greater possibilities to vary your decorative appearance and create new, different packages to that of competitor dairies and competitor packaging companies in order to differentiate your brand and thereby be able to sell more. Still, the packaging container must be of a reliable quality and its properties as to package integrity and food safety and shelf life may not be impaired by any such variations. Such differentiation opportunities must nevertheless not add too much to the packaging material costs.

Laminated and decorated packaging materials of the background art are known from documents WO 02/42040 A2 and FR 2 975 337 A1. These however disclose an outermost and thus exposed barrier layer.

### Summary of the invention

It is therefore an object of the invention to provide a method and an arrangement satisfying the above-mentioned needs. These are defined in claim 1 directed to a method for manufacturing a laminated and decorated packaging material, claim 16 directed to a laminated packaging material and claim 17 directed to a packaging container manufactured from the laminated packaging material of claim 16. According to an embodiment, the mantel surface can be provided with grooves or recesses in some selected areas, while it is provided with protrusions, plateaus or peaks within other selected areas, depending on the circumstances, and the needs and how the polymer of the outermost layer behaves.

According to one embodiment of the invention, the first lamination step is carried out at a first geographical location while the step of imprinting the laminated is carried out at a second geographical location. According to a further such embodiment, the laminated packaging material is wound up on a reel for intermediate storage or transport, in an intermediate step, between the lamination step and the imprinting step. The steps of laminating the packaging material, storing or transporting a reel of the laminated packaging material as well as the subsequent step of imprinting a pattern into the outermost transparent polymer layer of said laminated material, may be performed in a sequence of operations at the same occasion, or according to an embodiment at different occasions in time, i.e. in different days, weeks or months. Thus, there is provided a method for manufacturing a laminated and decorated packaging material, which comprises a first, outermost transparent polymer layer, to be directed towards the outside of a package made from the laminated packaging material, a substrate layer, being a carton or cellulose-based bulk layer, or being a pre-laminate comprising a pre-manufactured film, which is laminated to a carton or cellulose-based bulk layer, and a second, outermost layer of a thermo-sealable polymer, arranged on the other side of the substrate layer and opposite to the first outermost layer, and one or more further material layers, comprising a barrier layer, between said substrate layer and said second, outermost polymer layer, the method comprising a step of forwarding a web or sheet of the laminated packaging material towards a nip between two against each other rotatable rollers, said nip consisting of a first roller acting as an anvil roller and a second imprint roller, which has a mantel surface provided with protrusions, plateaus or peaks, within selected areas; the protrusions, plateaus or peaks together forming a pattern corresponding to said visual or tactile pattern on the packaging material; and subsequently a step of imprinting the pattern of the mantel surface of the second imprint roller into the outermost transparent polymer layer and said laminated packaging material, as it is passing in the form of a web or sheet through the nip, by applying pressure to the roller nip, the thus laminated and decorated packaging material consequently exhibiting a visual or tactile pattern, or a combination thereof, in the first outermost transparent polymer layer.

The materials to be laminated are forwarded into the lamination process steps as separate material webs or material feeds. The thickness of the first, outermost, transparent polymer layer is, according to some embodiments, from 8 to 30, preferably from 10 to 20, more preferably from 10 to 15, most preferably from 10 to 12 µm. When the first, outermost, transparent polymer layer is too thin, it will not protect a water sensitive bulk layer in the interior of the packaging laminate sufficiently, since any pinhole or crack in the polymer layer will be allowing liquid or stains to penetrate into the packaging material and lead to defects such as stains or bad adhesion between layers. Furthermore, most commonly, the outermost layer is also involved in the heat sealing of the packaging material into shaped packages, whereby the polymer layer needs a minimum of at least 10 µm, such as at least 12 µm of the polymer material.

According to some embodiments, the method further comprises a step of printing a decor pattern onto the substrate layer, which is located at the inside of the outermost transparent polymer layer, before the step of laminating the separate material layers together, said printed decor pattern being coated with the transparent polymer layer to be visible from the outside of a package manufactured from the laminated packaging material.

In some embodiments, the imprinted visual and/ or tactile pattern is applied in register alignment with the previously applied printed decor pattern in order to provide an added dimension to the total decor design, by visual and/or tactile effects in the laminated packaging material.

The imprinted visual and/ or tactile pattern is thus provided on the laminated packaging material before folding and forming of a packaging container therefrom.

For an optimal decorative effect, the imprinted visual and/ or tactile pattern is applied in register alignment with the previously applied printed decor pattern at an accuracy of the same order as the alignment within the printed decor pattern, between the different colours printed. For example, in flexographic printing, which is the preferred method of printing laminated packaging materials of the kind, there are a minimum of four colours which are sequentially printed and must be aligned to each other, i.e. cyan, mangenta, yellow and black. The register alignment may be controlled by an accuracy of as good as from ± 1 mm to ± 0,1 mm, such as from ± 0,5 mm to ± 0,1 mm.

The laminated packaging material further comprises a barrier layer between the substrate layer and the second outermost thermo-sealable polymer layer, preferably an aluminium foil layer. According to an embodiment, the thickness of the aluminium foil is from 5 to 10, such as 5-7 µm.

In the packaging of liquid food at aseptic conditions, for storage of the food during longer time periods, at ambient temperature, it is especially important that the laminated packaging material has sufficient barrier properties towards gases, in particular oxygen gas, in order to avoid deterioration of taste and nutritional content of the food. Also, barrier properties towards other migrating substances may be needed, depending on the circumstances, such as the prevention of aroma and flavour substances to escape from the food product into the packaging material, or of odour substances from the outside of the package to reach the content inside of it.

The imprint may reach beyond the depth of the outermost transparent layer(s) and into the bulk layer but stops before reaching such a barrier layer located on the opposite side of the substrate layer and bulk layer. It is important to control the depth of the imprint such that it does not damage other layers in the laminated material, in particular the barrier layers. Barrier materials are generally the most costly materials used in a packaging laminate, relative their surface weight. They are therefore generally made as thin as possible to reach sufficient and desired barrier properties. These materials may also be more brittle and sensitive to strain and mechanical stress, than other conventional thermoplastic layers of such laminates. In particular, an aluminium foil barrier layer is quite delicate when it comes to mechanical stress and impact, since it does not have elastic properties and is quite fragile and easy to crack or tear. The barrier layer is securing the asepticity and integrity of the package, towards penetrating substances from the outside of the package, and therefore must be kept as intact as possible. Any crack or pinhole or hole in the barrier material, eventually may influence the food product negatively, especially during long term storage, and should therefore be avoided.

According to an embodiment, the ratio between the depth of the imprint and the total thickness of the outer imprinted layer(s) and the bulk layer is lower than 0,30, such as 0,25, such as lower than 0.20. It has been seen that if the depth of the imprint becomes such that it exceeds this ratio, the barrier layer on the opposite side of the bulk layer is at risk of being damaged. In this calculation, it has then been taken into account that during the imprinting operation, the bulk layer will be temporarily compressed and be thinner, such that the imprinting tool reaches almost through and close to the barrier layer on the opposite side of the bulk layer, although the bulk layer reversibly assumes its original thickness after the imprinting operation. This relates in particular to bulk layers of thicker and denser papers or paperboard.

The carton-based packaging material is configured to be suitable for liquid packaging and has according to an embodiment, certain properties adapted for the purpose. The packaging material thus has a bulk layer of a paper or carton that fulfils the requirements to provide stiffness and dimensional stability to a packaging container produced from the packaging material. The cartons normally used are thus fibrous paperboards, i.e. fiberboards having a bulk of a network structure of cellulose fibres, with suitable density, stiffness and capability of resisting possible exposure to moisture. Non-fibrous cellulose-based cartons, on the other hand, of the type corrugated paperboard or honey-comb or cellular paperboards, are so-called structural paperboards and are not suitable for the purpose of this invention. In particular, the type of bulk layers or cartons or paperboards applicable to packaging materials and methods of this invention, are fibrous structures from homogeneous fibre layers, which advantageously in an embodiment also are configured in an I-beam or sandwich arrangement, with the respective middle layer and flanges being tied to each other over their entire surfaces facing each other. Typical fibres usable for the fibrous bulk are cellulose fibres from chemical pulp, CTMP, TMP, kraft pulp or the like.

According to an embodiment, the fibrous bulk layers, paperboards or cartons, suitable for the purpose of the invention have a density higher than 300, such as higher than 400, such as higher than 500 kg/m³ (according to ISO 534),

According to a further embodiment, the paper or paperboard has a thickness from 150 to 660 µm, (ISO 534) such as from 200 to 500 µm, such as from 250 to 400 µm.

According to another embodiment, the bulk layer is appropriately selected in order to obtain the desired stiffness suitable for the type of packaging container intended to contain a liquid food product. According to a further embodiment, the bending stiffness of the paperboard or carton is from 30 to 480 mN, such as from 80 to 300 mN.

According to a further embodiment, the paperboard has improved resistance to liquid penetration and high surrounding moisture content, by comprising wet strength additives and sizing agents and the like, in the paper composition. According to another embodiment, the paper or cellulose-based material, also called paper, paperboard or carton board, used herein comprises a grammage from 150 to 400 g/m2, such as from 200 to 350 g/m2, depending on the requirement for different types of packages. The grammage of the paperboard is assessed in accordance with ISO 536. Grammage expresses weight per unit area and is measured in g/m2.

According to one embodiment of the invention, the depth of the imprint is below 100 µm. For the larger standard liquid carton packaging, wherein paperboards have a thickness of from 400 to 500 µm, this has been concluded as the maximum depth possible, which should not be exceeded. Again, this is to certify that any barrier layer may be kept intact. It is an advantage to have a flat, unaffected inside layer, for example in subsequent operations in the filling machine, such as in the sterilisation operation and also in the sealing operations. Thus, embossed patterns, which are perceptible on the other side of the laminated material, or somehow able to affect the surface properties of the other side of the laminated material, are to be avoided.

An added dimension to the total design of the decor may be provided by a glossy or matte imprinted pattern in the outermost transparent polymer layer and the packaging laminate, which is interacting with the printed decor on the substrate layer.

An added dimension to the total design of the decor may be provided by a light-diffractive effect or by a holographic effect in the outermost transparent polymer layer and the packaging laminate, which is interacting with the printed decor on the substrate layer. The depth of an imprint of such a light-diffractive or holographic effect is according to an embodiment below 1 µm, such as within the visible range of wavelengths.

An added dimension to the total design of the decor may alternatively be provided by a tactile surface-texture effect in the outermost transparent polymer layer and the packaging laminate, which is interacting with the printed decor on the substrate layer. The depth of an imprint of such a tactile effect is according to an embodiment lower than 100 µm.

According to an embodiment, an added dimension to the total design of the decor is provided by one or a combination of two or more effects, selected from a glossy effect, a matte effect, a light-diffractive effect, a holographic effect or a tactile surface-texture effect, created by an imprinted pattern in the outermost transparent polymer layer and the packaging laminate, which is interacting with the printed decor on the substrate layer. Being able to provide a variety of visible and/or tactile effects on the decorative surface of a laminated packaging material opens up for indefinite opportunities to further tailor-make and differentiate decorative art-work beyond the state of the art colour printing technologies. By adding also the dimension of matte and/or glossy surfaces, or by light-diffractive or holographic effects, for example, which interact with a colour-printed decor, very different and enhanced decor appearance may be obtained.

According to an embodiment, one or more tactile effects are interacting with the printed decor on the substrate layer. According to a particular embodiment, a combination of a tactile effect with a further visible surface effect, adds attractive differentiation and value to a colour-printed packaging material and a packaging container made from said packaging material.

According to a further embodiment, a surface effect similar to the self-cleaning properties that are a result of very high water repellence, i.e.super-hydrophobicity, as exhibited by the leaves of the Lotus flower is created, in the embossing operation, by the imprinted pattern in the outermost transparent polymer layer. By this effect, dirt particles are picked up by water droplets due to the micro- and nanoscopic architecture on the surface, which minimizes the droplet's adhesion to that surface. According to an embodiment, the outermost transparent polymer is a thermo-sealable polymer, contributing to effective sealing of packages made from the laminated packaging material. Most commonly and according to an embodiment of the invention, the outermost transparent polymer is a thermo-sealable polyolefin. In the thermo-sealing of packaging materials, in particular liquid carton laminated packaging materials, together, it is important that the thermo-sealable polymer surfaces are able to melt fuse and bond to each other by the interlinking of polymer molecules across the interface of the material surfaces which are pressed together. In this melt fuse bonding process it is accordingly important that the thermoplastic polymers of the outermost layers are un-modified, in their originally intended form for thermoplastic heat sealing, i.e. without any additives that could be added for improving the imprinting process, such as release agents or the like.

According to a further embodiment, the outermost transparent polymer is applied by means of melt extrusion coating onto the substrate layer. As described above, the substrate layer is a bulk layer comprising cellulose fibres.The bulk layer is a carton or cellulose-based bulk layer, such as paper or paperboard, as described above.

According to a further embodiment, the substrate layer is a pre-laminate comprising a pre-manufactured film, which is laminated to a bulk layer as defined above. Thus, in this embodiment, the substrate is a pre-laminate or pre-layer, comprising sub-layers, wherein one of the sub-layers is a bulk layer, and another is a pre-manufactured film. Pre-manufactured films suitable for the purpose of the invention, such as oriented polyester or polypropylene films, are commonly available. Such films are first laminated to the bulk layer, such as a paperboard, and are subsequently printed with a decorative colour print pattern. Alternatively, it is possible to print a pre-manufactured film in a first step, and subsequently laminating the film to a paper or paperboard bulk layer, in order to provide a printed substrate for further lamination operations. In some embodiments the pre-manufactured film may be a , metallised, pre-manufactured film. In such embodiments, the metallisation is normally located on the opposite side from the print side, i.e. directed towards the inside of a package to be made from the packaging laminate. Where there is a metallised background visible towards the outside of the package, having a decorative colour print and finally an additional dimension of a visible and/or tactile pattern in the outermost, transparent polymer layer, the variety of different possible decor appearances increases even further. The metallisation enhances and mirrors the subsequently embossed or imprinted pattern to provide an enhanced three-dimensional visual effect. With a metallised background in combination with light diffractive and/or holographic effects, the opportunities to obtain a tailor-made and unique decor appearance are almost indefinite.

In embodiments wherein the substrate layer comprises a pre-manufactured film, the film is laminated to a bulk layer comprising cellulose fibres, polymer or other light weight material in a step prior to the forwarding to an imprinting step. Since the nip pressures applied during the imprinting operation are similar to the nip pressure applied during lamination operations, an imprinted pattern will be deteriorated and "flattened", by any subsequent lamination operation. It is thus important to finish all lamination operations before initiating any imprint operations. Accordingly, the outermost transparent and thermo-sealable polymer layer needs to be applied onto the printed substrate before the printing process step. If additional polymer would be coated after the lamination, the imprinted pattern would be at least partly destroyed by the imprint pattern being filled and coated with molten, or dissolved/ dispersed polymer coating composition.

Furthermore, in order to provide thermo-sealability of the outermost transparent polymer layer, the outermost transparent polymer should be a thermoplastic polymer, thus excluding thermo-setting resins or cross-linking/ curing lacquers and the like.

The laminated packaging material comprises a bulk layer,and said bulk layer may in a further method step be provided with weakening crease lines in order to facilitate folding of the laminated packaging material in the manufacturing of packaging containers from the packaging material, and the visual and/or tactile imprinted pattern is applied in register alignment with said weakening crease lines, as well as with any printed decor pattern printed onto the substrate layer.

In a further embodiment, the outermost, transparent polymer layer comprises in the majority low density polyethylene (LDPE) or linear low density polyethylene (LLDPE), or is a blend of these polymers. These are the most commonly used polymers for outermost polymer layers in liquid carton packaging today. However, other polyolefins, such as polypropylene, or any copolymer or blend combination of various olefins or polyolefins may be viable alternatives.

According to an embodiment, the imprint operation is carried out at a temperature lower than the melting point of the polymer of the transparent, outermost layer to be imprinted, as measured by DSC methods, preferably significantly lower than the melting point of the polymer. According to a particular embodiment, the imprinting or embossing operation is carried out at a temperature of the polymer, being a low density polyethylene (LDPE) or a linear low density polyethylene (LLDPE), of below 90 degrees Celsius.

According to an embodiment, the imprint operation is carried out at a temperature lower than the Vicat softening point of the polymer such as a temperature between room temperature, i.e. 23 °Celsius, and the softening point of the polymer of the transparent, outermost layer. The

Vicat softening point or Vicat hardness is the determination of the softening point for materials that have no definite melting point, such as plastics and polymers. It is taken as the temperature at which a specimen is penetrated to a depth of 1 mm by a flat-ended needle with a 1 mm² circular or square cross-section. For the Vicat A test, a load of 10 N is used. For the Vicat B test, the load is 50 N. Standards to determine Vicat softening point include ASTM D 1525 and ISO 306, which are largely equivalent. The Vicat softening temperature can be used to compare the heat-softening characteristics of different materials.

While some heating may be advantageous, and make the method of imprinting more efficient, it is important to keep the temperature of the polymer as low as possible in order to be able to keep the laminated material cool and ready for storage on reels after the process. It has also been seen that thermoplastic polymers may increase in tack, or stickiness, when heated, which needs to be avoided as far as possible, such that the imprinted polymer surface does not stick to the surface of the imprint roller mantle or sleeve. It is thus not desirable to operate too close to, or around, the softening temperature of the polymer, but to operate as cold as possible for an optimal result. Heating of the polymer surface to be imprinted may take place by pre-heating the surface before entering the nip, or while being imprinted in the nip.

According to an embodiment, the pattern of the protrusions, plateaus or peaks of the mantel surface of the second roller, is provided on an interchangeable sleeve of material, which is mounted onto a solid metal core, to form said second roller, for the purpose of allowing quick change of patterns to be imprinted on different laminated packaging materials.

According to a further embodiment, the first roller, the anvil roller, has a surface hardness lower than the hardness of the second roller, the imprint roller, such as a hardness from 80 to 98 Shore A. The imprint roller or sleeve of the imprint roller is made of metal. Suitable metal materials for the imprint roller or sleeve, are found among steel or alloys based on chrome or nickel, usually employed in similar tool manufacturing. The relative difference in hardness between the two rollers in the imprinting nip, has a positive effect on the control and adjustment of the depth of the imprint while at the same time obtaining high quality of the imprinted visible and/or tactile effect.

The nip pressure between the first and second rollers is relatively high, i.e. much higher than in a lamination roller nip or the like, with a lineal load varying from 10 up to 100 N/mm, such as from above 40 to below 100 N/mm, such as from 50 to 90 N/mm, depending on the desired surface effect, the surface area and/or the depth of the imprint.

It has been found that the imprinted laminated packaging material, exhibiting a visible and/or tactile effect in its outermost transparent polymer layer, is able to withstand subsequent handling in transportation and in the operations in a filling machine. In particular, it has proven to withstand sterilisation by hot liquid without significant impairment of the visible and/or tactile effect.

On the other hand, it is especially important to not expose the imprinted first outermost layer to further operations involving pressure on the laminated packaging material, i.e. to avoid further lamination operations after the operation of imprinting visible and/or tactile patterns into the outermost polymer layer. Further lamination pressure will flatten the texture and depth/height of the imprinted surface and thereby destroy or diminish the visible and/or tactile effect.

Forming part of the invention is thus a method wherein the bulk layer is a layer of paper, paperboard or carton.

Further, part of the invention, is a method wherein the depth of the imprint is below 100 µm.

Further, a method wherein the outermost transparent polymer is applied by means of melt extrusion coating onto the substrate layer is part of the invention.

The thermoplastic polymers suitable for extrusion coating in order to form the outermost transparent polymer layer of the packaging laminate, are also suitable for heat sealing. In particular, the outermost thermoplastic polymer layer should be heat sealable to itself as well as to the outer thermoplastic polymer layer on the opposite side of the laminated material. This is an important property and feature for a well functioning packaging process, in packaging machines for high-speed forming, filling and sealing of liquid food packages. By the term heat-sealable, means that the thermoplastic polymer is able to quickly melt-bond, i.e. create polymer entanglements across the contacting and heated polymer surfaces, such that a non-separable welding joint is formed, at a temperature that is not degrading the polymer material or affecting the polymer negatively, and then to quickly cool down again to fix the sealed joint to be permanently strong. According to an embodiment, such sealing of the outermost layer to the innermost layer (i.e. the outermost thermoplastic layer on the opposite side of the packaging laminate) is done, as described above, when reforming a web of the laminated packaging material into a tube by both of the longitudinal edges of the web being united to each other in an overlap joint and welding together the inner- and outermost heat sealable thermoplastic polymer layers.

### Description of the drawings

Further advantages and favourable characterizing features will be apparent from the following detailed description, with reference to the appended figures, in which:
Fig. 1a, 1b and 1c are cross-sectional views of laminated packaging materials according to aspects described herein,
Fig. 2a and 2b are schematic views of manufacturing lines for the conversion into the laminated packaging materials of Fig. 1a and 1b, respectively,
Fig. 3 shows the principle of how packaging containers may be manufactured from the laminated packaging material in a continuous forming, filling and sealing process,
Fig. 4a-4d show examples of packaging containers produced from the laminated packaging material according to embodiments described herein,
Fig. 5 shows an example of an enhanced decorative appearance of a printed and laminated packaging material, which has been further provided with a surface effect in the outermost transparent polymer layer, being of tactile or visible character, or a combination of both, and
Fig. 6 shows a sleeve carrying the pattern of protrusions, plateaus or peaks, constituting the mantel surface of the second imprint roller or embossing roller, and how the sleeve is mounted onto a metal core of said second roller. The pattern of the sleeve is to be imprinted onto the outermost polymer surface of the laminated packaging material.

### Detailed description of embodiments

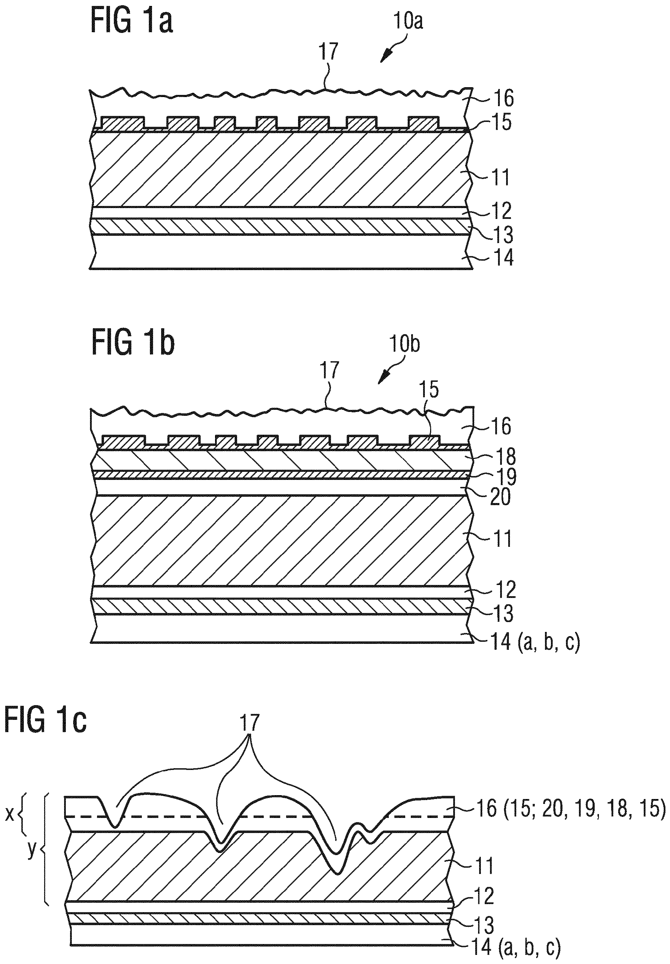

An example of a laminated packaging material of a traditional type, but significantly changed and improved in appearance by the method of the present invention, is shown in Fig. 1a. The packaging laminate 10a has a bulk layer, or core layer, of paper or paperboard 11. The bulk layer could alternatively be made of other light-weight materials made of cellulose or other polymers. The bulk layer is laminated to a barrier layer 13, traditionally an aluminium foil, by an intermediate thermoplastic polymer bonding layer 12, normally applied by means of melt extrusion lamination. Alternatively, the bonding layer 12 could be arranged by wet coating and drying or by dry lamination with curable adhesive formulations. On the inside of the barrier layer 13, on the side to be directed towards the inside of a package made from the laminated material, thermoplastic, thermo-sealable and liquid-tight polymers 14 are arranged - either as a mono-layer or as a coextruded multilayer (14a, 14b, 14c) of up to three layers of different olefin monomer based polymers (not shown). Normally, the layer adjacent the aluminium foil is a functionalized polyolefin for optimal adhesion properties to the aluminium foil, e.g. an ethylene acrylic acid copolymer (EAA) or a maleic anhydride modified polyolefin, such as maleic anhydride modified polyethylene or polypropylene, such as a MAH-PE or MAHA-PP tie polymer. The outer side of the paperboard 11 is printed with an ink decor 15, preferably by a flexographic printing ink and printing method. Since it in most cases is desirable and necessary to protect the printed decor from wet conditions and abrasion or wear in handling and distribution of the packages, it is further coated on the outside with a transparent, protective layer of a polymer 16. Most conveniently, and in particular for liquid packaging, it is also desirable to be able to seal the packaging containers by heat welding the innermost layer 14 and the outermost polymer layer 16 to each other in the fold forming process into filled and sealed packages, why the outermost polymer layer also is a thermo-sealable and liquid tight polymer layer similar to the thermoplastic polymers of the inside layers 14(a,b,c). On the surface of the outermost, transparent polymer layer 16, is visible, and optionally also tactile, a pattern 17 of indentations, grooves, ridges and protrusions, as imprinted into the polymer layer 16 and the packaging laminate.

Another example of a laminated packaging material of a traditional type, but significantly changed and improved in its appearance by the method of the present invention, is shown in Fig. 1b. The packaging laminate 10b has in addition to the layers 11, 12, 13 and 14(a,b,c), as previously described in Fig. 1a, a further layer of a strong and/or decorative polymer film 18, which has optionally been coated by a thin, vapour deposition coated metallisation layer 19. The metallised film may be any conventional, optionally metallised, oriented polymer film, such as a polypropylene or polyethyleneterephthalate film (OPP, BOPP, OPET or BOPET). It is laminated to the paperboard bulk layer 11 in a separate lamination operation, preceding the printing operation in which an ink decor layer 15 is applied. The lamination of the paperboard to the pre-manufactured film is according to an embodiment performed as a melt extrusion lamination, employing a polyolefin bonding layer 20, such as polyethylene such as low density polyethylene (LDPE) or alternatively an adhesive polymer comprising functional carboxylic groups, such as ethylene (meth-)acrylic acid copolymers (E(M)AA). Alternatively, the bonding layer 20 may be arranged by wet coating and drying or by dry lamination with curable adhesive formulations.

The outer side of the pre-manufactured, optionally metallised, film is thus printed with an ink decor 15, preferably by a flexographic printing ink and printing method. Since it is in most cases desirable and necessary to protect the printed decor from wet conditions and abrasion or wear in handling and distribution of the packages, it is further coated on the outside with a transparent layer of a polymer 16. Most conveniently, and in particular for liquid packaging, it is also desirable to be able to seal the packaging containers by heat welding the innermost layer 14 and the outermost polymer layer 16 to each other in the fold forming process into filled and sealed packages, why the outermost polymer layer is also a thermo-sealable and liquid tight polymer layer similar to the thermoplastic polymers of the inside layers 14 (a,b,c). On the surface of the outermost, transparent polymer layer 16, is visible, and optionally also tactile, a pattern 17 of indentations, grooves, ridges and protrusions, as imprinted into the polymer layer 16 and the packaging laminate.

According to the invention, and as has already been mentioned, the polymer for the bonding layer 12 can be chosen more or less freely and is thus not limited to any particular type of polymer. An example of a usable polymer for the bonding layer 12 are various extrusion lamination grades of low-density polyethylene (LDPE). Other examples of usable polymers for the bonding layer 12 are linear polymers, which have the advantage of helping to improve the mechanical properties of the finished packaging laminate. Examples of linear polymers that can be used in the method according to the invention are high-density polyethylene (HDPE), medium-density polyethylene (MDPE), linear low-density polyethylene (LLDPE), very low-density polyethylenes (VLDPE), ultra low-density polyethylenes (ULDPE) produced with conventional catalysts or so-called single-site catalysts, or constrained-geometry catalysts, including so-called metallocene catalysts. In some embodiments, a multilayer combination or a blend of two or more of the above mentioned polymers may be effective for bonding the layers 11 and 13 to each other.

Examples of adhesives useful in the layers 14a (which is adjacent to the barrier layer) and 20, are for example ethylene-acrylic acid copolymer (EAA) and ethylene-methacrylic acid copolymer (EMAA). Such adhesive polymers are commercially available under the trade name Primacor from Dow Chemical Company, and another such adhesive can be obtained from DuPont under the trade name Nucrel. A further example is obtainable from ExxonMobil Chemicals under the trade name Escor.

Other examples of adhesive polymers having free, active carboxylic acid groups, suitable for some aspects of the present invention, are maleic-anhydride functionalised polyolefins, in particular maleic-anhydride functionalised polyethylenes, which provide alternative polyolefin-based polymers having free carboxylic acid functionality.

Alternative materials that have gas barrier properties and are usable as layer 13 in the packaging material and method according to an embodiment may be of both organic and also inorganic nature. Examples of organic materials are copolymers of ethylene and vinyl alcohol (EVOH) and various types of polyamides (PA). Examples of inorganic materials can be an aluminium foil or a polymer film which, on one or both of its sides, has a coating of metal, e.g. vapour-deposited or vacuum-metallized aluminium or a vapour-deposited coating of an oxide, e.g. aluminium oxide, or silicon oxide (SiOx). An aluminium foil is preferably used which, in addition to having excellent barrier properties against gases, also allows the packaging laminate to be sealed by so-called induction sealing, which is a rapid, simple and effective heat-sealing technique.

Examples of usable polymers for the liquid-tight, heat-sealable outer layers 14 and 16 according to an embodiment of the material and method are polyolefins, such as low-density polyethylene (LDPE), linear low-density polyethylene (LLDPE), high-density polyethylene (HDPE) and polypropylene (PP), copolymers based on olefin monomers, and blends of two or more such polymers.

In Fig. 1c, a principal and enlarged view of the surface pattern 17, in the surface of the outermost transparent polymer layer 16, is shown. As the drawing illustrates, the surface pattern comprises imprints or indentations or grooves of varying depth in the material surface, but their depth never reaches all the way through the bulk layer 11, i.e. does not risk affecting the surface structure or surface smoothness of the other side of the bulk layer 11 or the inside layers 12, 13 and 14, or in any way come close to affect the barrier layer 13 in any way. As shown, some indentations are only affecting the polymer layers 16, or 16, 20, 19, 18, denoted with X in Fig. 1c, while other indentations reach down to the bulk layer surface or even down into the middle part of the bulk layer. The first imprint indentations mainly create visible or light diffractive effects. The latter create tactile effects in the packaging laminate surface. It also becomes clear from Fig 1c, that the polymer layers X, do not break or crack by the imprint operation, but simply follow the imprint indentations and still protect the bulk layer 11 towards stains and wet conditions on the outside of the a package to be made from the laminated material.

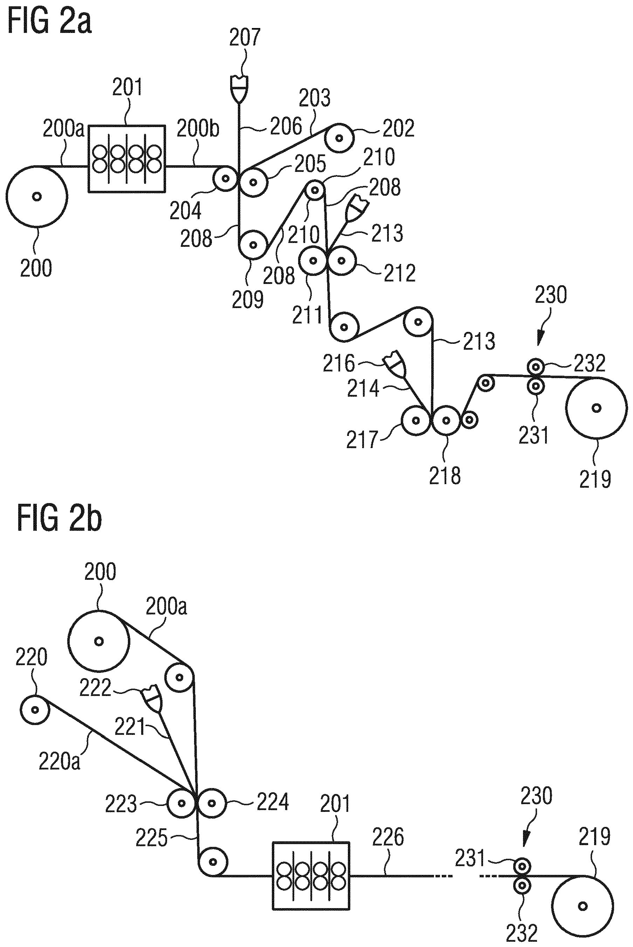

According to the invention, the packaging laminate 10a in Figure 1a can be produced in the manner shown schematically in Figure 2. A web 200a of paper or paperboard is unwound from a storage reel 200 and printed with an ink decor to form a printed decor ink layer, in a printing station, preferably by flexographic printing technology using a minimum of 4 colours CMYK. After the printing operation, the printed paperboard 200b is normally wound up onto a reel for intermediate storage (not shown) before being brought to the lamination operations. For the lamination to the printed paperboard 200b, a corresponding web 203 of a material with barrier properties against gases, in particular oxygen, such as aluminium foil, is unwound from a storage reel 202. The two webs 200b and 203 are brought together with each other and are guided together through a nip between two adjacent rotatable cylinders 204 and 205, while at the same time a laminating material 206 is applied between the webs in order to laminate them to each other and thereby form a durable laminated web 208. The laminating material 206 is applied by melt extrusion with the aid of an extruder 207 arranged above the nip.

The laminated web 208 is then conveyed via guide rollers 209 and 210 towards and through a nip between two further adjacent rotatable cylinders 211 and 212, while at the same time one surface of the web 208 is provided with a second outermost liquid-tight and thermo-sealable coating 213 of extrusion-coated polymer. This outermost polymer layer will later form the inside of a packaging container produced from the laminated material. In a subsequent nip between another two adjacent rotatable cylinders 217 and 218, the other surface of the web 208 is provided with a first outermost transparent coating 214 of extruded polymer. These two extrusion-coating steps can be carried out in reverse order and also, wholly or partly, before the lamination step in the nip between the cylinders 204 and 205.

In the example shown, the outermost liquid-tight coating 213 is applied to one surface of the web by extrusion with the aid of an extruder 215, and the outermost transparent polymer coating 214 is applied to the other surface of the web 208 by extrusion with the aid of a corresponding extruder 216 arranged near the web 208.

At a final operation 230, the web of the thus laminated packaging material is forwarded through a nip between two against each other rotatable rollers 231 and 232, said nip consisting of a first roller 232 acting as an anvil roller and of a second imprint roller 231, which has a mantel surface provided with grooves or recesses within selected areas, and protrusions, plateaus or peaks within other selected areas, which protrusions, plateaus or peaks together form a pattern corresponding to said visual or tactile pattern in the outermost transparent polymer layer on the packaging material. The pattern of the mantel surface of the second roller is imprinted into the outermost transparent polymer layer as said laminated packaging material is passing as a web or sheet through the nip, when applying pressure to the roller nip 230.

Following further mechanical or other machining operations, such as cutting, slitting and the like, on the thus coated web, the laminated and enhanced packaging material is finally wound up on a storage reel 219 for onward transport and further handling in which it is formed into dimensionally stable packaging containers for oxygen-sensitive liquid food, e.g. milk, juice, wine and cooking oil, as will be described herein below.

Fig. 2b shows schematically the main differing part from the manufacturing method shown in Fig. 2a, according to which an alternative laminated packaging material may be manufactured. The alternative laminated packaging material, comprises a decorative pre-manufactured film for enhanced visible appearance on the outer side of the packaging material, i.e. the side intended to form the outside of a package, as illustrated in Fig. 1b.

In a very first step, a web 200a of paper or paperboard is unwound from a storage reel 200 and a further material web 220a, being a pre-manufactured polymer film, is unwound from another storage reel 220. The two material webs 200a and 220a are brought together with each other and are guided together through a nip between two adjacent rotatable cylinders 223 and 224, while at the same time a laminating material 221 is applied between the webs in order to laminate them to each other and thereby form a laminated web 225. The laminating material 221 is applied by melt extrusion with the aid of an extruder 222 arranged above the nip, and may be for example a polyolefin material such as polyethylene or a functionalised olefin copolymer such as ethylene acrylic acid copolymer. In case of the latter choice of polymer bonding material, the layer thickness of the bonding layer may be made significantly thinner. The laminated web 225 is further led to a printing station 201, where it is printed with an ink decor to form a printed decor ink layer, preferably by flexographic printing technology using a minimum of 4 colours CMYK. After the printing operation, the printed laminated web 226 is wound up on a reel for intermediate storage (not shown) before being brought to the lamination operations. The subsequent lamination operations, after the printing operation, are essentially the same and are continued as in Fig. 2a after the dotted line at the direction of the web towards the lamination nip 204-205. Also in this case, the two steps of extrusion-coating of the two layers 213 and 214 can be carried out in reverse order and also, wholly or partly, before the lamination step in the nip between the cylinders 204 and 205.

At a final operation 230, the web of the thus laminated packaging material is forwarded through a nip between two against each other rotatable rollers 231 and 232, said nip consisting of a first roller 232 acting as an anvil roller and of a second roller 231, which has a mantel surface provided with grooves or recesses within selected areas, and protrusions, plateaus or peaks within other selected areas, which protrusions, plateaus or peaks together form a pattern corresponding to said visual or tactile pattern in the outermost transparent polymer layer on the packaging material. The pattern of the mantel surface of the second roller is imprinted into the outermost transparent polymer layer as said laminated packaging material is passing as a web or sheet through the nip, when applying pressure to the roller nip 230. As seen in Fig. 2a and 2b, the imprinting roller or embossing roller 231 is acting on the side of the laminated packaging material which is intended to form the outside of a package manufactured from the material, and my be acting from above or beneath depending on the circumstances in the set-up of the lamination line.

Following further mechanical or other machining operations, such as cutting, slitting and the like (not shown), on the thus coated web, the laminated and enhanced packaging material is finally wound up on a storage reel 219 for onward transport and further handling in which it is formed into dimensionally stable packaging containers for oxygen-sensitive liquid food, e.g. milk, juice, wine and cooking oil, as will be described herein below.

From a web of the packaging laminate 10 in Figure 1 for example, it is possible, as has already been mentioned, to produce dimensionally stable packaging containers of a disposable type for oxygen-sensitive liquid foods, such as milk, juice, wine and cooking oil, by folding and heat-sealing in a manner known per se. Such packaging containers are nowadays produced with the aid of modern packaging machines of the type in which finished packages are shaped, filled and sealed.

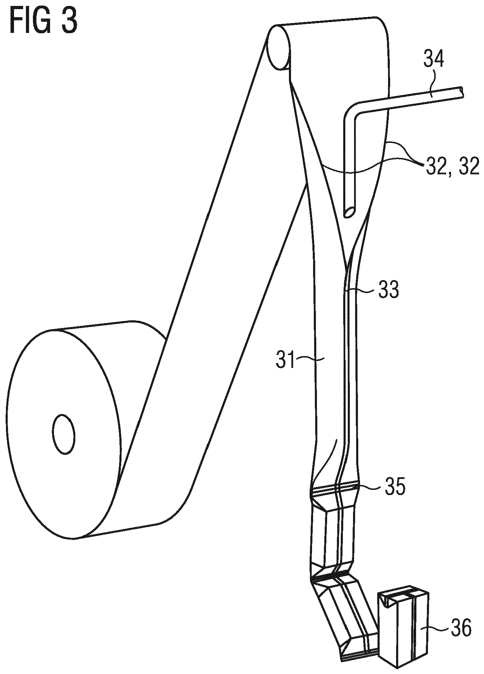

One way in which packaging containers made of the packaging laminate 10 in Figure 1 can be shaped, filled and sealed is illustrated in Figure 3. The so-called single-use packages are produced from the web by means of the latter first of all being sterilised and then shaped into a tube 31, in which the longitudinal edges 32, 32a of the web are joined to each other in an overlap seam 33 by melting together the mutually facing surfaces of the plastic layers 14 and 15. The tube is filled 34 with the intended liquid or semi-liquid food product and is divided into contiguous pillow-shaped packaging units 36 by repeated pressing-together and heat-sealing of the tube transversely with respect to the longitudinal direction 35 of the tube, below the product level in the tube. The packaging units 36 are separated from each other and finally given the desired geometric shape, usually by fold forming along prepared crease lines into a cuboid or parallelepipedal shape by means of at least one further folding and heat-sealing step.

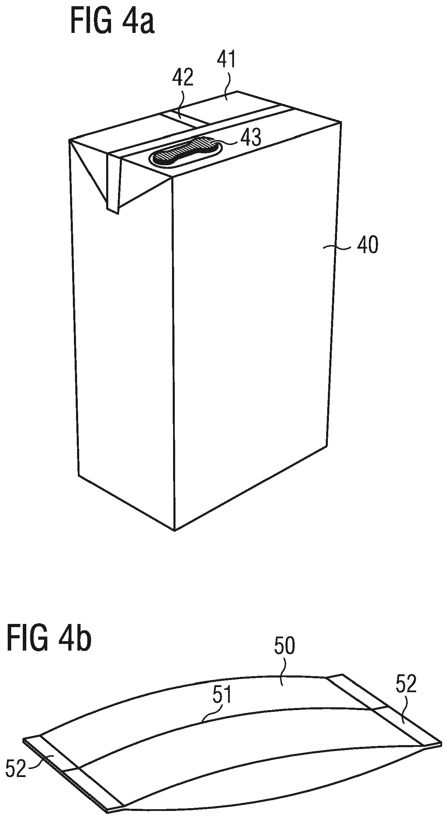

A well-known example of a single-use package of this type is the commercial package sold under the name Tetra Brik® Aseptic, which is shown in Figure 4a. The packaging container is particularly suitable for beverages, sauces, soups or the like. Typically, such a package has a volume of about 100 to 1000 ml. It may be of any configuration, but is preferably parallelepipedal, having longitudinal and transversal seals 51a and 52a, respectively, and optionally an opening device 53. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the half-folded packaging container is still is easy to handle and dimensionally stable when put on a shelf in the food store or on a table or the like. Such packaging containers 40a can also be provided with a suitable opening arrangement 43, for example a screw cap which, when opened, penetrates and removes the packaging material and permits emptying of the packaged product. For this purpose, the laminated packaging laminate can have perforations in the paperboard layer that has been laminated in between the polymers and barrier layers of the laminate. Alternatively, a hole is punched in the laminated packaging material immediately before the filling process, after which the hole is provided with a tape or pull-tab, on both sides of the packaging material. After the packaging container has been filled and sealed, an opening arrangement in the form of a hinge or screw cap can be applied on top of the covered hole. Alternatively, an opening arrangement is applied which is cast onto a punched hole directly during the filling process. It is not necessary to provide the packaging container with an opening device, it can also be torn open by means of a tear-perforation, or by cutting.

Alternatively, packaging containers can be produced as above but retain, as their final shape, the pillow shape that is obtained directly after the packaging units have been separated from each other and are therefore not further shaped by folding. Such a package is generally produced using a thinner paperboard material and therefore entails great demands on adhesion and integrity of the packaging material with regard to the lamination layers and also to the mechanical strength characteristics, in particular the elastic characteristics, of the polymer layers. An example of one such package is shown in Figure 4b. Normally, it is not dimensionally stable enough to form a cuboid or wedge-shaped packaging container, and is not fold formed after transversal sealing 52. It will thus remain a pillow-shaped pouch-like container and be distributed and sold in this shape.

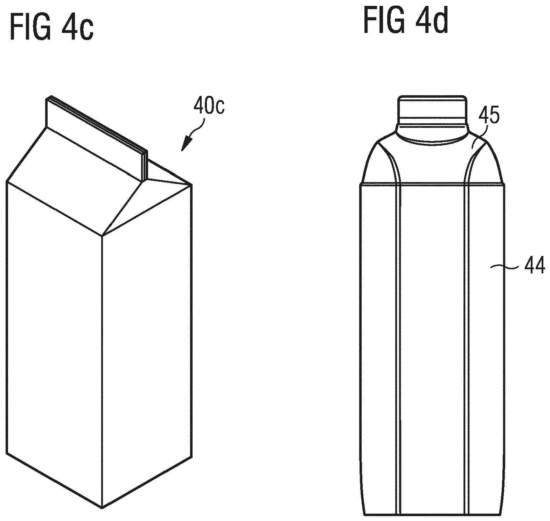

Packaging containers for oxygen-sensitive liquid food, for example juice, can also be produced from sheet-like blanks or prefabricated blanks of the packaging laminate 10a or 10b in Figure 1a or 1b. From a tubular blank of the packaging laminate 10a that is folded flat, packages are produced by first of all building the blank up to form an open tubular container capsule, of which one open end is closed off by means of folding and heat-sealing of integral end panels. The thus closed container capsule is filled with the intended food product, e.g. juice, through its open end, which is thereafter closed off by means of further folding and heat-sealing of corresponding integral end panels. An example of a packaging container produced from sheet-like and tubular blanks is shown in Figure 4c and is a so-called gable-top package 40c. There are also packages of this type which have a moulded top and/or screw cap opening device made of plastic.

A further example of a a bottle-type package is shown in Fig. 4d, which is formed from a packaging material blank into a folded sleeve 44, which is further joined to a moulded top and opening arrangement 45. This type of bottle-like package may be aseptic or non-aseptic. A commercial example of such an aseptic bottle is sold under the name Tetra Evero® Aseptic.

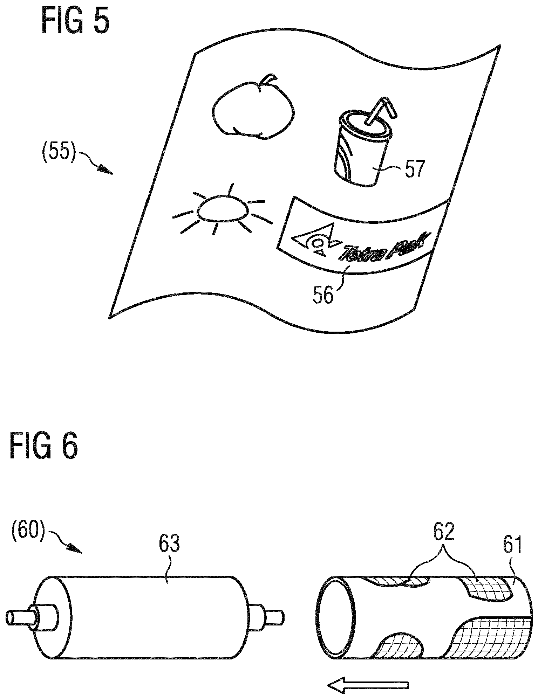

Figure 5 shows an example of an enhanced decorative appearance of a sheet of printed and laminated packaging material, which has been further provided with a surface effect in the outermost transparent polymer layer, being of tactile or visible character, or a combination of both. The area 56 being printed with a colour print onto the paperboard of a logotype and a word, text or name, has been further enhanced by increased gloss or shine in the outermost, upper polymer layer, such that the logo and name are clearly and brightly enhanced. Also features of other parts 57 of the decorative colour print has been enhanced by surface effects in the outer polymer layer, such as by tactile surface texture, increased gloss or matte effects or by a shiny hologram-like feature. The enhancing surface effects may be tailor-made and adapted to, and aligned with, the colour print of each and every print design and to each and every size and shape of package, by a flexible and economical method as outlined below.

In Figure 6, it is shown how a sleeve 61 carrying the pattern of protrusions, plateaus or peaks 62, constitutes the mantel surface of an imprint roller or embossing roller 60; 231, when the sleeve is mounted onto a metal core 63 of such a roller. The pattern is to be imprinted onto the outermost, transparent polymer surface of the laminated packaging material, under the influence of pressure and in some cases heating of the polymer layer to be imprinted and/ or of the mantel surface. The mantel surface of the imprint roller may be made of a hard metal material such as of steel, or other chrome or nickel alloys, which is engraved to exhibit the desired protrusions, peaks and plateaus. The counter roller, or anvil roller, most advantageously has a more elastic mantel or mantel surface, for the purpose of creating the imprint pattern at a controlled and pre-determined depth of the polymer layer of the laminated packaging material.

Thus, the hard metal mantel surface of the imprint roller is brought to act on the laminated packaging material by the help of an anvil roller made of a relatively hard but elastic polymer or rubber material, in order to obtain the adequate and optimal pressure and imprint conditions. This concerns thus laminated packaging materials having a bulk layer between thin outermost layers of polymer, more particularly carton-based laminated packaging materials. It is believed that the bulk layer of thicker paper-, or paperboard-based material, contributes to the imprint process such that a clear and imprint may be made in the outermost thermoplastic polymer layer, at a relatively high speed and at a low temperature of the polymer, such as even at room temperature.

By using a system of exchangeable imprint roller sleeves, the process of imprinting after lamination may be kept at only low investment needed in imprinting equipment, and the switching between patterned decors from one package decor to another will not require long stops in the manufacturing line and process. Since relatively high line speeds, such as above 100 m/min, such as at least 200 m/min, and higher, are possible, the system is quite efficient and economical, as a whole.

By way of conclusion it should be observed that the present invention which has been described above with particular reference to the accompanying drawings, is not restricted to these embodiments described and shown exclusively by way of example, and that modifications and alterations obvious to a person skilled in the art are possible without departing from the inventive concept as disclosed in the appended claims.

### Industrial applicability

By the method of the present invention, laminated packaging materials with enhanced decorative effects may be produced and tailor-made to their subsequent use, for various package shapes and sizes, as well as to additional patterns of printed decor and creasing lines, in order to produce packaging containers having new or differentiated appearance to consumers and retailers, at comparatively low cost.

## Claims

1. Method for manufacturing a laminated and decorated packaging material (10a; 10b) comprising a first, outermost transparent polymer layer (16), to be directed towards the outside of a package made from the laminated packaging material, a substrate layer (11), being a carton or cellulose-based bulk layer, or being a pre-laminate comprising a pre-manufactured film, which is laminated to a carton or cellulose-based bulk layer, and a second, outermost layer of a thermo-sealable polymer (14(a,b,c)), arranged on the other side of the substrate layer opposite to the first outermost layer, and one or more further material layers (12, 13), comprising a barrier layer (13), between said substrate layer and said second, outermost polymer layer, the laminated and decorated packaging material exhibiting a visual or tactile pattern (17), or a combination thereof, in the first outermost transparent polymer layer (16), the method comprising the steps of
a. laminating the separate material layers in order to form a web of laminated packaging material,
i. including laminating said substrate layer (11; 18,19,20,11) and said first outermost layer (16) of transparent polymer to be adjacent and contiguous to each other, and
ii. before or after step i. arranging said substrate layer, the barrier layer (13) and said second outermost layer (14 (a,b,c)) of a thermo-sealable polymer to be laminated to each other,
b. forwarding a web of the thus laminated packaging material through a nip (230) between two against each other rotatable rollers, said nip consisting of a first roller acting as an anvil roller (232) and a second imprint roller (231), which has a mantel surface provided with protrusions, plateaus or peaks, within selected areas, the protrusions, plateaus or peaks together forming a pattern corresponding to said visual or tactile pattern on the packaging material, and
c. imprinting the pattern of the mantel surface of the second imprint roller (321) into the outermost transparent polymer layer (16) and said laminated packaging material, as it is passing as a web or sheet through the nip (230), by applying pressure to the roller nip, thus obtaining the laminated and decorated packaging material.

2. Method according to claim 1, wherein step a. is, or has been, carried out at a first location and steps b. and c. are carried out at a second location and the laminated packaging material is wound up on a reel for intermediate storage or transport, in a step d, between steps a. and b, or before step b., respectively.

3. Method according to any one of the preceding claims, further comprising a step of printing a decor pattern (15) onto the substrate layer (11; 18,19,20,11), the decor pattern to be located at the inside of, and adjacent to, the outermost transparent polymer layer (16), before the step of laminating the separate material layers together, for the decor to be visible from the outside of a package manufactured from the laminated packaging material.

4. Method according to claim 3, wherein the imprinted visual and/ or tactile pattern (17) is applied in register alignment with the previously applied printed decor pattern (15) in order to provide an added dimension to the total decor design, by visual and/or tactile effects in the laminated packaging material.

5. Method according to any one of the preceding claims, wherein the thickness of the first, outermost, transparent polymer layer (16) is from 8 to 30 µm, such as from 10 to 20 µm.

6. Method according to any one of the preceding claims, wherein the pre-manufactured film (18) is a metallised (19), pre-manufactured film.

7. Method according to any one of the preceding claims, wherein the barrier is an aluminium foil layer and the thickness of the aluminium foil is from 5 to 10, such as 5-7 µm.

8. Method according to any one of the preceding claims, wherein the depth of the imprint may reach beyond the depth of the outermost transparent layer(s) (16; 16,18,19,20) and into the substrate or bulk layer (11) but stops before reaching the barrier layer (13) located on the inside of the bulk layer and substrate layer.

9. Method according to any one of the preceding claims, wherein the ratio between the depth of the imprint and the total thickness (Y) of the outer imprinted layer(s) (X) (16; 16,18,19,20) and the bulk layer (11) is lower than 0,30, such as lower than 0,25, such as lower than 0.20.

10. Method according to any one of the preceding claims, wherein the bulk layer (11) is a paperboard having a density higher than 300 kg/m³ (ISO 534), such as higher than 400, such as higher than 500 kg/m³.

11. Method according to any one of the preceding claims, wherein the bulk layer (11) is a paperboard having a thickness from 150 to 660 µm, such as from 200 to 500 µm, such as from 250 to 400 µm.

12. Method according to any one of the preceding claims, wherein step c. is carried out at a temperature lower than the melt temperature, i.e. the melting point, of the polymer of the transparent, outermost layer (16), such as at least 10 degrees, such as at least 20 degrees lower than the melt temperature.

13. Method according to any one of the preceding claims, wherein step c. is carried out at a temperature lower than the Vicat softening temperature of the polymer of the transparent, outermost layer (16) such as between 23 °Celsius and the Vicat softening temperature.

14. Method according to any one of the preceding claims, wherein the outermost transparent polymer (16) is a thermo-sealable polymer, contributing to effective sealing of packages made from the laminated packaging material (10a; 10b), such as a polyolefin, such as in the majority low density polyethylene (LDPE) or linear low density polyethylene (LLDPE) or a blend thereof.

15. Method according to any one of the preceding claims, wherein the imprint roller (231) or the mantel surface of the imprint roller is made of metal, such as steel, and optionally, the anvil roller (232), has a hardness from 80 to 98 Shore A.

16. Laminated packaging material, exhibiting a visual or tactile pattern, or a combination thereof, in a first outermost layer of a transparent polymer (16), directed towards the outside of a package made from the laminated packaging material, and further comprising a substrate layer (11; 18,19,20,11), being a fibrous carton or cellulose-based bulk layer, or being a pre-laminate comprising a pre-manufactured film, which is laminated to a fibrous carton or cellulose-based bulk layer, a second, outermost layer of a thermo-sealable polymer (14(a,b,c)), arranged on the other side of the substrate layer opposite to the first outermost layer, and a barrier layer (13) arranged between said substrate layer and said second, outermost polymer layer, the laminated packaging material being manufactured according to the method of any one of claims 1-15.

17. Packaging container manufactured from the laminated packaging material as claimed in claim 16.

## Patentansprüche

1. Verfahren zur Herstellung eines laminierten und dekorierten Verpackungsmaterials (10a; 10b) umfassend eine erste äußerste transparente Polymerschicht (16), die der Außenseite einer aus dem laminierten Verpackungsmaterial hergestellten Verpackung zugewandt sein soll, eine Substratschicht (11), die eine Masseschicht aus Karton oder auf Cellulosebasis ist oder ein Vorlaminat ist, das einen vorgefertigten Film umfasst, der auf eine Masseschicht aus Karton oder auf Cellulosebasis laminiert ist, und eine zweite äußerste Schicht aus einem heißsiegelfähigen Polymer (14(a, b, c)), die an der anderen Seite der Substratschicht gegenüber der ersten äußersten Schicht angeordnet ist, und eine oder mehrere weitere Materialschichten (12, 13), umfassend eine Sperrschicht (13) zwischen der Substratschicht und der zweiten äußersten Polymerschicht, wobei das laminierte und dekorierte Verpackungsmaterial eine sichtbare oder tastbare Struktur (17) oder eine Kombination davon in der ersten äußersten transparenten Polymerschicht (16) aufweist, wobei das Verfahren die Schritte umfasst:
a. Laminieren der getrennten Materialschichten, um eine Bahn aus laminiertem Verpackungsmaterial zu bilden,
i. einschließlich Laminieren der Substratschicht (11; 18, 19, 20, 11) und der ersten äußersten Schicht (16) aus transparentem Polymer, so dass sie benachbart und aneinander angrenzend sind, und
ii. vor oder nach Schritt i. Anordnen der Substratschicht, der Sperrschicht (13) und der zweiten äußersten Schicht (14(a, b, c)) aus einem heißsiegelfähigen Polymer, um aneinander laminiert zu werden,
b. Führen einer Bahn des so laminierten Verpackungsmaterials durch einen Spalt (230) zwischen zwei gegeneinander drehbaren Walzen, wobei der Spalt aus einer ersten Walze, die als Gegenlagerwalze (232) dient, und einer zweiten Prägewalze (231) besteht, die eine Manteloberfläche aufweist, die innerhalb ausgewählter Bereiche mit Vorsprüngen, Plateaus oder Spitzen versehen ist, wobei die Vorsprünge, Plateaus oder Spitzen gemeinsam eine Struktur bilden, die der sichtbaren oder tastbaren Struktur auf dem Verpackungsmaterial entspricht, und
c. Prägen der Struktur der Manteloberfläche der zweiten Prägewalze (321) in die äußerste transparente Polymerschicht (16) und das laminierte Verpackungsmaterial, wenn es als Bahn oder Blatt durch den Spalt (230) tritt, indem Druck auf den Walzenspalt ausgeübt wird, um das laminierte und dekorierte Verpackungsmaterial zu erhalten.

2. Verfahren gemäß Anspruch 1, wobei Schritt a. an einem ersten Ort durchgeführt wird oder worden ist und die Schritte b. und c. an einem zweiten Ort durchgeführt werden und das laminierte Verpackungsmaterial bei einem Schritt d zwischen den Schritten a. und b. bzw. vor Schritt b. zur Zwischenlagerung oder zum Transport auf eine Rolle aufgewickelt wird.

3. Verfahren gemäß einem der vorstehenden Ansprüche, ferner umfassend einen Schritt des Druckens einer Dekorstruktur (15) auf die Substratschicht (11; 18, 19, 20, 11), wobei die Dekorstruktur an der Innenseite der äußersten transparenten Polymerschicht (16) und benachbart dazu angeordnet sein soll, vor dem Schritt des Zusammenlaminierens der getrennten Materialschichten, wobei das Dekor von außerhalb einer aus dem laminierten Verpackungsmaterial hergestellten Verpackung sichtbar ist.

4. Verfahren gemäß Anspruch 3, wobei die geprägte sichtbare und/oder tastbare Struktur (17) in deckungsgleicher Ausrichtung mit der zuvor aufgebrachten gedruckten Dekorstruktur (15) aufgebracht wird, um durch sichtbare und/oder tastbare Effekte in dem laminierten Verpackungsmaterial eine zusätzliche Dimension zu der gesamten Dekorgestaltung bereitzustellen.

5. Verfahren gemäß einem der vorstehenden Ansprüche, wobei die Dicke der ersten äußersten transparenten Polymerschicht (16) von 8 bis 30 µm beträgt, wie z. B. von 10 bis 20 µm.

6. Verfahren gemäß einem der vorstehenden Ansprüche, wobei der vorgefertigte Film (18) ein metallisierter (19) vorgefertigter Film ist.

7. Verfahren gemäß einem der vorstehenden Ansprüche, wobei die Sperre eine Aluminiumfolienschicht ist und die Dicke der Aluminiumfolie von 5 bis 10, wie z. B. 5-7 µm, beträgt.

8. Verfahren gemäß einem der vorstehenden Ansprüche, wobei die Tiefe der Prägung über die Tiefe der äußersten transparenten Schicht(en) (16; 16, 18, 19, 20) hinausgehen und in das Substrat oder die Masseschicht (11) ragen kann, aber endet, bevor die Sperrschicht (13) erreicht ist, die an der Innenseite der Masseschicht und Substratschicht angeordnet ist.

9. Verfahren gemäß einem der vorstehenden Ansprüche, wobei das Verhältnis zwischen der Tiefe der Prägung und der Gesamtdicke (Y) der äußeren geprägten Schicht(en) (X) (16; 16, 18, 19, 20) und der Masseschicht (11) kleiner als 0,30 ist, wie z. B. kleiner als 0,25, wie z. B. kleiner als 0,20.

10. Verfahren gemäß einem der vorstehenden Ansprüche, wobei die Masseschicht (11) ein Karton mit einer Dichte von größer als 300 kg/m³ (ISO 534) ist, wie z. B. größer als 400, wie z. B. größer als 500 kg/m³.

11. Verfahren gemäß einem der vorstehenden Ansprüche, wobei die Masseschicht (11) ein Karton mit einer Dicke von 150 bis 660 µm ist, wie z. B. von 200 bis 500 µm, wie z. B. von 250 bis 400 µm.

12. Verfahren gemäß einem der vorstehenden Ansprüche, wobei Schritt c. bei einer Temperatur unterhalb der Schmelztemperatur, d. h. des Schmelzpunkts, des Polymers der transparenten äußersten Schicht (16) durchgeführt wird, wie z. B. wenigstens 10 Grad, wie z. B. wenigstens 20 Grad unterhalb der Schmelztemperatur.

13. Verfahren gemäß einem der vorstehenden Ansprüche, wobei Schritt c. bei einer Temperatur unterhalb der Vicat-Erweichungstemperatur des Polymers der transparenten äußersten Schicht (16) durchgeführt wird, wie z. B. bei zwischen 23 °Celsius und der Vicat-Erweichungstemperatur.

14. Verfahren gemäß einem der vorstehenden Ansprüche, wobei das äußerste transparente Polymer (16) ein heißsiegelfähiges Polymer ist, das zu der wirkungsvollen Siegelung von aus dem laminierten Verpackungsmaterial (10a; 10b) hergestellten Verpackungen beiträgt, wie z. B. ein Polyolefin, wie z. B. die Mehrzahl von Polyethylen niederer Dichte (LDPE) oder linearem Polyethylen niederer Dichte (LLDPE) oder einem Gemisch davon.

15. Verfahren gemäß einem der vorstehenden Ansprüche, wobei die Prägewalze (231) oder die Manteloberfläche der Prägewalze aus Metall besteht, wie z. B. Stahl, und gegebenenfalls die Gegenlagerwalze (232) eine Härte von 80 bis 98 Shore A aufweist.

16. Laminiertes Verpackungsmaterial, das eine sichtbare oder tastbare Struktur oder eine Kombination davon in einer ersten äußersten Schicht aus einem transparenten Polymer (16) aufweist, die der Außenseite einer aus dem laminierten Verpackungsmaterial hergestellten Verpackung zugewandt ist, und ferner eine Substratschicht (11; 18, 19, 20, 11), die eine faserige Masseschicht aus Karton oder auf Cellulosebasis ist oder ein Vorlaminat ist, das einen vorgefertigten Film umfasst, der auf eine Masseschicht aus Karton oder auf Cellulosebasis laminiert ist, eine zweite äußerste Schicht aus einem heißsiegelfähigen Polymer (14(a, b, c)), die an der anderen Seite der Substratschicht gegenüber der ersten äußersten Schicht angeordnet ist, und eine Sperrschicht (13), die zwischen der Substratschicht und der zweiten äußersten Polymerschicht angeordnet ist, umfasst, wobei das laminierte Verpackungsmaterial gemäß dem Verfahren gemäß einem der Ansprüche 1-15 hergestellt ist.

17. Verpackungsbehälter, hergestellt aus dem laminierten Verpackungsmaterial gemäß Anspruch 16.

## Revendications

1. Procédé de fabrication d'un matériau d'emballage stratifié et décoré (10a ; 10b) comprenant une première couche de polymère transparent située tout à l'extérieur (16), destinée à être orientée vers l'extérieur d'un emballage fabriqué à partir du matériau d'emballage stratifié, une couche de substrat (11), laquelle est une couche de base à base de carton ou de cellulose, ou est un préstratifié comprenant un film préfabriqué, qui est appliqué par stratification sur une couche de base à base de carton ou de cellulose, et une deuxième couche d'un polymère thermoscellable située tout à l'extérieur (14(a, b, c)), disposée sur l'autre côté de la couche de substrat opposé à la première couche située tout à l'extérieur, et une ou plusieurs couches de matériau supplémentaires (12, 13), comprenant une couche barrière (13), entre ladite couche de substrat et ladite deuxième couche de polymère située tout à l'extérieur, le matériau d'emballage stratifié et décoré présentant un motif visuel ou tactile (17), ou une combinaison de ceux-ci, dans la première couche de polymère transparent située tout à l'extérieur (16), le procédé comprenant les étapes qui consistent à :
a. assembler par stratification les couches de matériau individuelles afin de former une bande de matériau d'emballage stratifié,
i. y compris assembler par stratification ladite couche de substrat (11 ; 18, 19, 20, 11) et ladite première couche de polymère transparent située tout à l'extérieur (16) de telle sorte qu'elles soient adjacentes et contiguës l'une à l'autre, et
ii. avant ou après l'étape i., disposer ladite couche de substrat, la couche barrière (13) et ladite deuxième couche d'un polymère thermoscellable située tout à l'extérieur (14(a, b, c)) de façon à les assembler par stratification les unes avec les autres,
b. faire passer une bande du matériau d'emballage ainsi stratifié dans une zone de contact (230) entre deux cylindres rotatifs tournant l'un contre l'autre, ladite zone de contact consistant en un premier cylindre faisant fonction de contre-cylindre (232) et en un deuxième cylindre de gaufrage (231), lequel comporte une surface extérieure pourvue de saillies, de plateaux ou de sommets, dans des zones sélectionnées, les saillies, les plateaux ou les sommets formant ensemble un motif correspondant audit motif visuel ou tactile sur le matériau d'emballage, et
c. former par gaufrage le motif de la surface extérieure du deuxième cylindre de gaufrage (321) dans la couche de polymère transparent située tout à l'extérieur (16) et ledit matériau d'emballage stratifié, au fur et à mesure de son passage dans la zone de contact (230) sous la forme d'une bande ou d'une feuille, en exerçant une pression sur la zone de contact entre les rouleaux, et en obtenant ainsi le matériau d'emballage stratifié et décoré.

2. Procédé selon la revendication 1, dans lequel l'étape a. est, ou a été, exécutée à un premier emplacement et les étapes b. et c. sont exécutées à un deuxième emplacement et le matériau d'emballage stratifié est enroulé sur une bobine pour faire l'objet d'un stockage intermédiaire ou d'un transport, à une étape d., entre les étapes a. et b., ou avant l'étape b., respectivement.

3. Procédé selon l'une quelconque des revendications précédentes, comprenant en outre une étape d'impression d'un motif de décoration (15) sur la couche de substrat (11 ; 18, 19, 20, 11), le motif de décoration étant destiné à se trouver à l'intérieur de, et adjacent à, la couche de polymère transparent située tout à l'extérieur (16), avant l'étape d'assemblage par stratification des couches de matériau individuelles les unes avec les autres, pour que la décoration soit visible de l'extérieur d'un emballage fabriqué à partir du matériau d'emballage stratifié.

4. Procédé selon la revendication 3, dans lequel le motif visuel et/ou tactile gaufré (17) est appliqué de façon à correspondre par alignement au motif de décoration imprimé appliqué auparavant (15) afin d'apporter une dimension additionnelle à la conception globale de la décoration, en créant des effets visuels et/ou tactiles dans le matériau d'emballage stratifié.

5. Procédé selon l'une quelconque des revendications précédentes, dans lequel l'épaisseur de la première couche de polymère transparent située tout à l'extérieur (16) est de 8 à 30 µm, par exemple de 10 à 20 µm.

6. Procédé selon l'une quelconque des revendications précédentes, dans lequel le film préfabriqué (18) est un film métallisé (19) préfabriqué.

7. Procédé selon l'une quelconque des revendications précédentes, dans lequel la barrière est une couche de feuille d'aluminium et l'épaisseur de la feuille d'aluminium est de 5 à 10 µm, par exemple de 5 à 7 µm.

8. Procédé selon l'une quelconque des revendications précédentes, dans lequel la profondeur du gaufrage peut aller au-delà de la profondeur de la/des couche(s) transparente(s) située(s) tout à l'extérieur (16 ; 16, 18, 19, 20) et s'étendre dans la couche de substrat ou la couche de base (11), en se terminant toutefois avant d'atteindre la couche barrière (13) située sur l'intérieur de la couche de base et de la couche de substrat.

9. Procédé selon l'une quelconque des revendications précédentes, dans lequel le rapport entre la profondeur du gaufrage et l'épaisseur totale (Y) de la/des couche(s) gaufrée(s) extérieure(s) (X) (16 ; 16, 18, 19, 20) et de la couche de base (11) est inférieur à 0,30, par exemple inférieur à 0,25, par exemple inférieur à 0,20.

10. Procédé selon l'une quelconque des revendications précédentes, dans lequel la couche de base (11) est un papier cartonné ayant une densité supérieure à 300 kg/m³ (ISO 534), par exemple supérieure à 400 kg/m³, par exemple supérieure à 500 kg/m³.

11. Procédé selon l'une quelconque des revendications précédentes, dans lequel la couche de base (11) est un papier cartonné ayant une épaisseur de 150 à 660 µm, par exemple de 200 à 500 µm, par exemple de 250 à 400 µm.

12. Procédé selon l'une quelconque des revendications précédentes, dans lequel l'étape c. est exécutée à une température inférieure à la température de fusion, c'est-à-dire le point de fusion, du polymère de la couche transparente située tout à l'extérieur (16), par exemple d'au moins 10 degrés, par exemple d'au moins 20 degrés inférieure à la température de fusion.

13. Procédé selon l'une quelconque des revendications précédentes, dans lequel l'étape c. est exécutée à une température inférieure à la température de ramollissement Vicat du polymère de la couche transparente située tout à l'extérieur (16), par exemple entre 23 ° Celsius et la température de ramollissement Vicat.

14. Procédé selon l'une quelconque des revendications précédentes, dans lequel le polymère transparent situé tout à l'extérieur (16) est un polymère thermoscellable, contribuant à fermer hermétiquement de manière efficace des emballages fabriqués à partir du matériau d'emballage stratifié (10a ; 10b), par exemple une polyoléfine, par exemple une majorité de polyéthylène de basse densité (LDPE) ou de polyéthylène de basse densité linéaire (LLDPE) ou d'un mélange de ceux-ci.

15. Procédé selon l'une quelconque des revendications précédentes, dans lequel le cylindre de gaufrage (231) ou la surface extérieure du cylindre de gaufrage est en métal, par exemple en acier, et optionnellement, le contre-cylindre (232) a une dureté Shore A de 80 à 98.

16. Matériau d'emballage stratifié, présentant un motif visuel ou tactile, ou une combinaison de ceux-ci, dans une première couche d'un polymère transparent située tout à l'extérieur (16), orientée vers l'extérieur d'un emballage fabriqué à partir du matériau d'emballage stratifié, et comprenant en outre une couche de substrat (11 ; 18, 19, 20, 11), laquelle est une couche de base fibreuse à base de carton ou de cellulose, ou est un préstratifié comprenant un film préfabriqué, qui est appliqué par stratification sur une couche de base fibreuse à base de carton ou de cellulose, une deuxième couche d'un polymère thermoscellable située tout à l'extérieur (14(a, b, c)), disposée sur l'autre côté de la couche de substrat opposé à la première couche située tout à l'extérieur, et une couche barrière (13) disposée entre ladite couche de substrat et ladite deuxième couche de polymère située tout à l'extérieur, le matériau d'emballage stratifié étant fabriqué par le procédé selon l'une quelconque des revendications 1 à 15.

17. Contenant d'emballage fabriqué à partir du matériau d'emballage stratifié selon la revendication 16.
